# EUROPEAN PATENT APPLICATION

(11) **EP 4 806 701 A1**
(43) Date of publication of application: **16.09.2026**
(21) Application number: 26159977.3
(22) Date of filing: 23.02.2026
(51) Int. Cl.: B60K 35/22, B62D 1/187

(54) **VEHICLE INTERIOR DISPLAY DEVICE**

(30) Priority: 11.03.2025 JP 2025038400
(71) Applicant: MAZDA MOTOR CORPORATION, Hiroshima 730-8670 (JP)
(72) Inventor: Mitsuaki, Maekawa, Aki-gun, Hiroshima, 730-8670 (JP); Akiko, Uga, Aki-gun, Hiroshima, 730-8670 (JP)
(74) Representative: Lorenz Seidler Gossel Part. mbB

(57) **Abstract**

The present invention relates to a vehicle interior display device. On a meter 12 of the vehicle interior display device, first lines 12a, 12b and second lines 12c, 12d are displayed inside a rim 11a of a steering wheel 11. The first lines 12a, 12b are displayed to be disposed along an inner circumference 11d of the rim 11a and away from each other on left and right sides in a vehicle width direction. The second lines 12c, 12d are displayed to be disposed away from each other on the left and right sides in the vehicle width direction. On the meter 12, the second lines 12c, 12d are connected to the first lines 12a, 12b via connection lines 12g, 12h, respectively. The connection portions 12g, 12h are displayed at positions in the vicinity of the inner circumference 11d of the rim 11a, respectively. The present invention further relates to a vehicle comprising such vehicle interior display device.

## Description

### [Technical Field]

The present invention relates to a vehicle interior display device and, in particular, to a display mode in an information display unit that is disposed in front of a steering wheel.

### [Background Art]

In order to safely drive a vehicle such as an automobile, it is important that a driver assumes a correct driving posture. Configurations for urging the driver to assume the correct driving posture, just as described, are disclosed in Patent Literature 1, 2.

Patent Literature 1 discloses a configuration in which, in a structure such as a meter hood or a side door, a contour line is provided in a manner to substantially coincide with an imaginary axis, which extends radially from a vanishing point toward inside of a cabin, when the driver who is seated on a driver's seat looks forward. By using such a contour line as a clue, the driver can adjust a position of the driver's seat in a front-rear direction and an up-down direction, or can adjust his/her posture.

Patent Literature 2 discloses a vehicle interior structure in which a meter display device is disposed in front of the steering wheel. The meter display device in Patent Literature 2 can display a speedometer and the like on the inside of the steering wheel, and can display an arcshaped broken line for guiding a grip area of the steering wheel on the outside of a rim for the driver. By the way, Patent Literature 2 discloses that display positions of various types of information on the meter display device are changed according to a position of the steering wheel.

### [Citation List]

### [Patent Literature]

[Patent Literature 1] JP2019-38404A
[Patent Literature 2] JP2023-152456A

### [Summary of Invention]

### [Technical Problem]

By the way, in a large number of the vehicles, the position of the steering wheel can be adjusted by using a tilt mechanism or the like in consideration of a physical difference and the like of the driver.

However, in the conventional vehicle, the positional adjustment of the steering wheel by the driver according to his/her own physique relies on the driver's feeling. Accordingly, in the conventional vehicle, it is difficult or time-consuming for the driver to accurately adjust the position of the steering wheel. Thus, it is considered that, in the conventional vehicle, the driver may start the vehicle without adjusting the position of the steering wheel to a correct position.

The invention has been made to solve the problems as described above, and an object of the invention is to provide a vehicle interior display device allowing a driver to visually recognize a display that functions as a guide to appropriately adjust a relative position of a steering wheel to the driver according to the driver's physique.

### [Solution to Problem]

The problem is solved by a vehicle interior display device according to claim 1 and by a vehicle according to claim 15. Preferred embodiments of the invention are the subjectmatter of the subclaims.

A vehicle interior display device according to the invention is a vehicle interior display device including an information display unit that visually provides various types of information to a driver who is seated on a driver's seat, in which the information display unit is disposed in front of a steering wheel that is coupled to a tilt mechanism in vehicle interior of a vehicle, and displays, in a manner to be visually recognizable by the driver who is seated on the driver's seat: paired first lines that are visually recognizable to be disposed along an inner circumference of a rim of the steering wheel and away from each other on left and right sides in a vehicle width direction in the rim; and paired second lines that are visually recognizable to be disposed away from each other on the left and right sides in the vehicle width direction in the rim of the steering wheel, and, in the information display unit, the paired second lines are displayed above the paired first lines, the paired second lines and the paired first lines are displayed to intersect each other, respectively, and a connection portion between each of the paired first lines and respective one of the paired second lines is displayed in the vicinity of the inner circumference of the rim of the steering wheel on the information display unit.

The vehicle interior display device according to the invention is configured to display the connection portions between the first lines and the second lines in the vicinity of the inner circumference of the rim of the steering wheel on the information display unit. Accordingly, when the driver who is seated on the driver's seat adjusts the steering wheel in an up-down direction according to his/her physique, it is only necessary to set positions of the connection portions with respect to the inner circumference of the rim to appropriate positions (close positions). As a result, in the vehicle interior display device, the first lines and the second lines function as guides for the driver to quickly adjust a relative positional relationship between his/her own position and the steering wheel.

In the vehicle interior display device according to the above embodiment, when a vehicle-width-direction imaginary line that extends along a vehicle horizontal axis in the vehicle width direction through a radial center of the steering wheel is assumed, the paired first lines and the paired second lines may be displayed in an area above the vehicle-width-direction imaginary line on the information display unit.

Since the vehicle interior display device according to the above embodiment displays the first lines and the second lines in the area above the vehicle-width-direction imaginary line on the information display unit, the driver can visually recognize them without significant movement of his/her line of sight. Thus, the vehicle interior display device is suitable for the seated driver to quickly adjust the relative positional relationship between his/her own position and the steering wheel.

In the vehicle interior display device according to the above embodiment, when an up-down-direction imaginary line that extends in an up-down direction of the vehicle through the radial center of the steering wheel and paired left and right inclined imaginary lines that extend obliquely to the left and right at an angle of 30 degrees with respect to the vehicle-width-direction imaginary line from the radial center of the steering wheel, respectively, are assumed, one first line of the paired first lines may be displayed on a left side of the up-down-direction imaginary line on the information display unit, another first line thereof may be displayed on a right side of the up-down-direction imaginary line on the information display unit, the one first line may be displayed to be visually recognizable by the driver who is seated on the driver's seat in a manner to intersect the inclined imaginary line that extends obliquely to the left from the radial center, and the another first line may be displayed to be visually recognizable by the driver who is seated on the driver's seat in a manner to intersect the inclined imaginary line that extends obliquely to the right from the radial center.

The vehicle interior display device according to the above embodiment is configured to display the paired first lines, each of which includes a portion intersecting the inclined imaginary line on respective one of the left and right sides, on the information display unit when the driver visually recognizes the front. The inclined imaginary line is an imaginary line that is assumed to extend obliquely upward from the radial center of the steering wheel at the angle of 30 degrees with respect to the vehicle-width-direction imaginary line (a vehicle horizontal axis). An intersection position between the inclined imaginary line and the rim of the steering wheel is a so-called 10:10 position of an analogue clock, and is a position recommended as a position where the driver grips the steering wheel. Thus, the vehicle interior display device can guide the driver's hand to a recommended grip position.

In the vehicle interior display device according to the above embodiment, the paired first lines may be displayed to be visually recognizable by the driver who is seated on the driver's seat in a manner to be bilaterally symmetrical about the up-down-direction imaginary line.

Since the vehicle interior display device according to the above embodiment is configured to display the paired first lines in the manner to be bilaterally symmetrical on the information display unit, the driver who has visually recognized the paired first lines can perceive the up-down-direction imaginary line that extends in the up-down direction. Thus, the vehicle interior display device can urge the driver who has visually recognized the paired first lines to assume a correct driving posture.

In the vehicle interior display device according to the above embodiment, the paired first lines may be displayed to be visually recognizable by the driver who is seated on the driver's seat in a manner that a distance therebetween in the vehicle width direction is gradually reduced in an up direction from below, and the paired second lines may be displayed to be visually recognizable by the driver who is seated on the driver's seat in a manner that a distance therebetween in the vehicle width direction is gradually reduced in the up direction from below.

The vehicle interior display device according to the above embodiment is configured to display each of the paired first lines and the paired second lines on the information display unit in the manner that the distance between the paired lines in the vehicle width direction is gradually reduced in the up direction from below. Accordingly, the vehicle interior display device can guide the line of sight of the driver, who has visually recognized the paired first lines and the paired second lines, to a vanishing point and an area below when the driver attempts to visually recognize the foreground by moving his/her line of sight upward from the information display unit.

In the vehicle interior display device according to the above embodiment, the paired first lines and the paired second lines may be displayed to be visually recognizable by the driver who is seated on the driver's seat in a manner that a degree of the gradual reduction in the distance between the paired second lines is greater than a degree of the gradual reduction in the distance between the paired first lines.

The vehicle interior display device according to the above embodiment is configured to display, on the information display unit, the degree of the gradual reduction in the distance between the second lines to be greater than the degree of the gradual reduction in the distance between the paired first lines. Accordingly, the vehicle interior display device is further effective in guiding the line of sight to the vanishing point and the area below when the line of sight is moved further upward from the paired first lines through the paired second lines.

In the vehicle interior display device according to the above embodiment, the paired first lines may be at least partially displayed in a binocular vision area, and the paired second lines may be displayed in a monocular vision area.

The vehicle interior display device according to the above embodiment is configured to display the paired first lines in the binocular vision area on the information display unit, and display the paired second lines in the monocular vision area on the information display unit. Accordingly, the information display unit can suppress the driver, who has visually recognized the second lines displayed in an area closer to a front windshield than the first lines, from being bothered while causing the driver to recognize a stereoscopic image.

Meanwhile, since the first lines are displayed in the binocular vision area below the second lines on the information display unit, it is possible to make the driver, who has visually recognized the left and right pair of the first lines, recognize the further stereoscopic image by fusing the first lines.

In the vehicle interior display device according to the above embodiment, a display color of the paired first lines may be changed according to at least one of a state of the vehicle and a surrounding state.

The vehicle interior display device according to the above embodiment is configured such that the display color of the paired first lines is changed according to at least one of the states. Thus, the vehicle interior display device can notify at least one of the states by the display color of the paired first lines.

The second lines are each displayed between respective one of the first lines and the front windshield, and thus function to guide the driver's line of sight to the first lines when the driver who is driving moves his/her line of sight from the foreground to the information display unit.

Preferably, the display device is configured to display the first lines in the binocular vision area below the second lines on the information display unit.

Further, the vehicle interior display device may be configured to display each of the second lines between respective one of the first lines and the front windshield.

In one embodiment the vehicle interior display unit comprises a display control unit which includes a first line display command unit, a second line display command unit, a third line display command unit, a connection line display command unit, and a display color command unit.

In one embodiment the vehicle interior display device is configured so that all of the lines, which are displayed on the meter of the display unit by the commands from the respective units of the display control unit are displayed on a radially inner side of an inner circumference of the rim of the steering wheel.

The vehicle interior display device may be configured to display the first lines and the second lines in the area above the vehicle-width-direction imaginary line.

In another embodiment the vehicle interior display device is configured to display the first lines and the second lines at positions below the vehicle-width-direction imaginary line.

The present invention further relates to a vehicle comprising an interior display device according to the present invention.

### [Advantageous Effects of Invention]

The vehicle interior display device according to each of the above aspects allows the driver to visually recognize the display that functions as the guide to appropriately adjust the relative position of the steering wheel to the driver according to the driver's physique.

### [Brief Description of Drawings]

[FIG. 1] FIG. 1 is a view illustrating a partial configuration of vehicle interior in a vehicle that includes a vehicle interior display device according to an embodiment.
[FIG. 2] FIG. 2 is a block diagram illustrating a configuration of the vehicle interior display device.
[FIG. 3] FIG. 3 is a view illustrating a steering wheel and a meter when a driver who is seated on a driver's seat visually recognizes the front.
[FIG. 4] FIG. 4 is a view illustrating a positional relationship between plural lines displayed on the meter and the steering wheel.
[FIG. 5] FIG. 5(a) is a view illustrating a modified example of meter display, and (b) a view illustrating another modified example of the meter display.

### [Description of Embodiments]

A description will hereinafter be made on an embodiment of the invention with reference to the drawings. The invention will be exemplified in the embodiment described below, and the invention is not limited to the following embodiment except for an essential configuration thereof.

In the drawings used in the following description, "LH" indicates a vehicle left direction, "RH" indicates a vehicle right direction, "UP" indicates a vehicle up direction, and "LO" indicates a vehicle down direction.

### 1. Vehicle Interior Structure

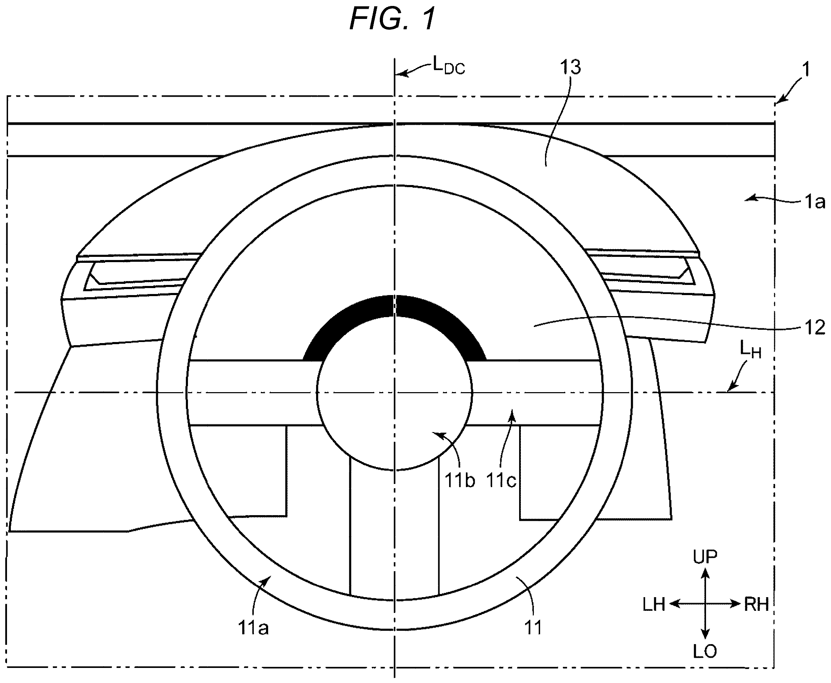

A description will be made on a structure of vehicle interior 1a of a vehicle 1 that includes a vehicle interior display device according to the present embodiment with reference to FIG. 1. FIG. 1 is a view illustrating a part of the vehicle interior 1a that is viewed forward from a driver's seat.

The vehicle 1 includes, in the vehicle interior 1a, a steering wheel 11, a meter (information display unit) 12, and a meter hood 13. The steering wheel 11 is disposed in front of the driver's seat (not illustrated), and includes: a substantially circular rim 11a; a hub 11b that is disposed at a radial center; and a spoke 11c that connects the rim 11a and the hub 11b. Although not illustrated, a tilt mechanism is coupled to the steering wheel 11 to allow positional adjustment thereof in an up-down direction. More specifically, when an up-down-direction imaginary line L_{DC} that extends in the up-down direction through the radial center of the steering wheel 11 and a vehicle-width-direction imaginary line L_{H} that extends along a vehicle horizontal axis in a vehicle width direction through the radial center are assumed, the steering wheel 11 can be adjusted such that the vehicle-width-direction imaginary line L_{H} moves in the up-down direction while the radial center is located on the up-down-direction imaginary line L_{DC}.

The meter 12 is a part of a configuration of the vehicle interior display device according to the present embodiment, and is a device that visually provides various types of information to the driver who is seated on the driver's seat. In the vehicle interior 1a of the vehicle 1, the meter 12 is disposed in front of the steering wheel 11, and is disposed such that the driver who is seated on the driver's seat can visually recognize the inside of the rim 11a of the steering wheel 11. More specifically, the meter 12 is disposed such that the driver who is seated on the driver's seat can visually recognize an area above the vehicle-width-direction imaginary line L_{H} on the inside of the rim 11a of the steering wheel 11.

In the vehicle 1, the meter 12 provides the driver with information on an own vehicle (such as a speed and an energy remaining amount), information on surroundings of the own vehicle, and the like.

The meter hood 13 is disposed around the meter 12 and in front of the steering wheel 11.

### 2. Configuration of Vehicle Interior Display Device 2

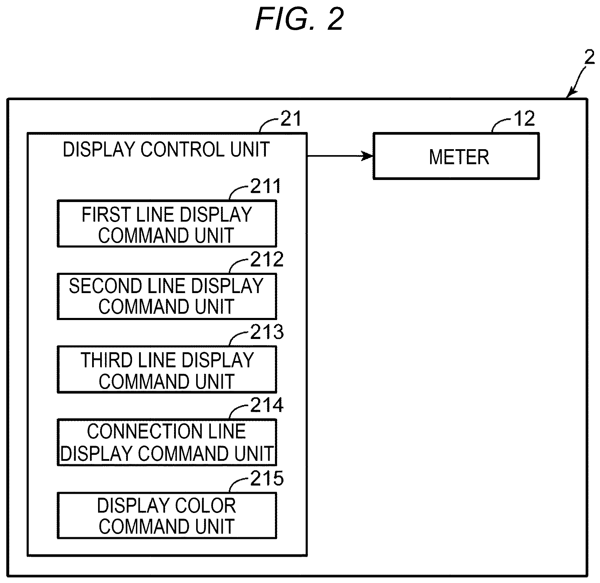

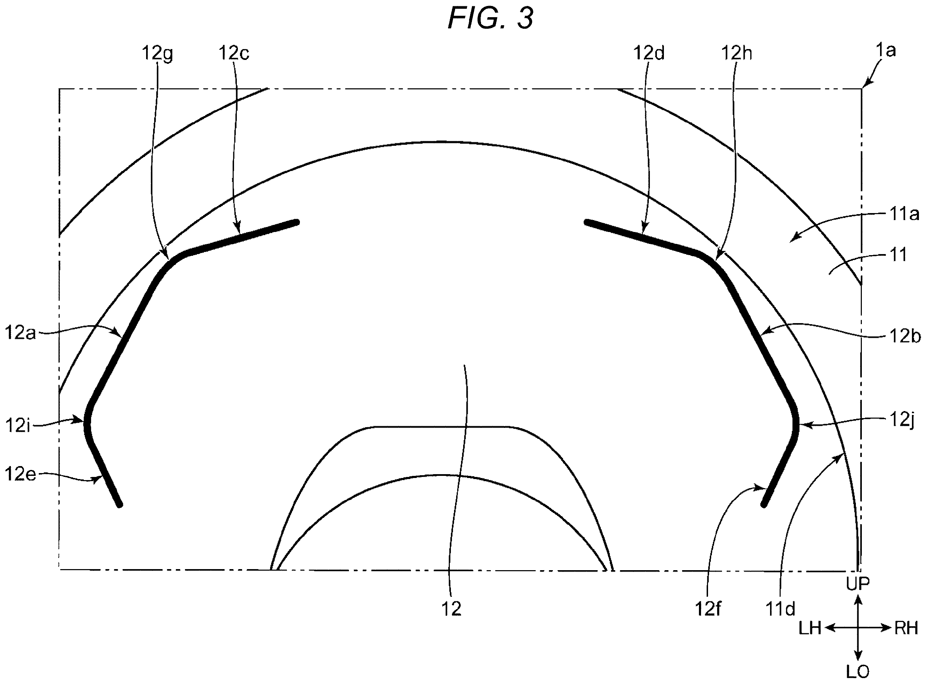

A description will be made on a vehicle interior display device 2 according to the present embodiment with reference to FIGs. 2 and 3.

As illustrated in FIG. 2, the vehicle interior display device 2 includes: a meter (information display unit) 12 that is disposed in front of the steering wheel 11; and a display control unit 21 that executes control related to image display on the meter 12. The display control unit 21 is configured to include a microprocessor including an MPU/CPU, an ASIC, ROM, RAM and the like, and memory. The display control unit 21 controls image display of the meter 12 by executing firmware or the like that is stored in the memory in advance.

The display control unit 21 includes a first line display command unit 211, a second line display command unit 212, a third line display command unit 213, a connection line display command unit 214, and a display color command unit 215. As illustrated in FIG. 3, the first line display command unit 211 causes the meter 12 to display paired first lines 12a, 12b, each of which is in a linear shape, in an ignition-on state. Here, each of the paired first lines 12a, 12b may be a line that extends linearly or may be a gently curved line.

The second line display command unit 212 displays a pair of linear second lines 12c, 12d in an area above the paired first lines in the meter 12 in the ignition-on state. Each of the paired second lines 12c, 12d may be a line that extends linearly or may be a gently curved line. The second line 12c that is displayed on a left side of the meter 12 is displayed at an angle intersecting with the first line 12a that is also displayed on the left side. Similarly, the second line 12d that is displayed on a right side of the meter 12 is displayed at an angle intersecting the first line 12b that is also displayed on the right side.

The third line display command unit 213 displays a pair of linear third lines 12e, 12f in an area below the paired first lines in the meter 12 in the ignition-on state. Each of the paired third lines 12e, 12f may be a line that extends linearly or may be a gently curved line. The third line 12e that is displayed on the left side of the meter 12 is displayed at an angle intersecting with the first line 12a that is also displayed on the left side. Similarly, the third line 12f that is displayed on the right side of the meter 12 is displayed at an angle intersecting with the first line 12b that is also displayed on the right side.

The connection line display command unit 214 respectively displays arcuate connection lines 12g, 12h at connection portions between the paired first lines 12a, 12b and the paired second lines 12c, 12d in the ignition-on state. The connection line display command unit 214 also respectively displays arcuate connection lines 12i, 12j at connection portions between the paired first lines 12a, 12b and the paired third lines 12e, 12f in the ignition-on state.

The display color command unit 215 issues a command to the meter 12 to set display colors of the paired first lines 12a, 12b and the paired third lines 12e, 12f to colors that correspond to an input state. For example, the display color command unit 215 issues the command to change the display colors of the first lines 12a, 12b according to at least one of a state of the own vehicle (the vehicle 1) (a state of the speed, the remaining energy amount, or the like) and a surrounding state of the own vehicle (a state of a surrounding vehicle, a travel lane, or the like).

As illustrated in FIG. 3, all of the lines 12a to 12j, which are displayed on the meter 12 by the commands from the respective units 211 to 215 of the display control unit 21, are displayed on a radially inner side of an inner circumference 11d of the rim 11a of the steering wheel 11. Accordingly, the driver who is seated on the driver's seat can visually recognize all the lines 12a to 12j that are displayed on the meter 12.

### 3. Display Position of Each Line 12a to 12j in Meter 12

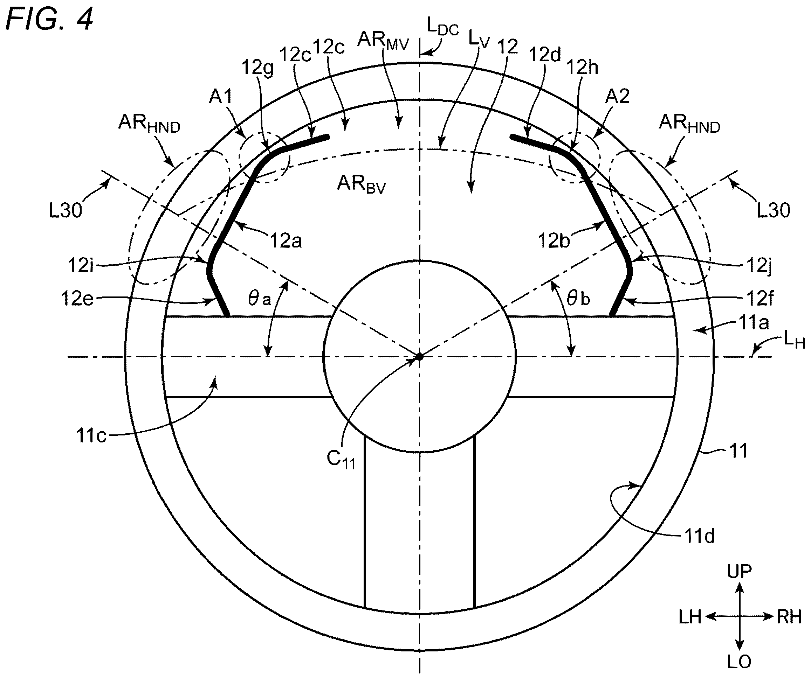

A description will be made on a display position of each of the lines 12a to 12j on the meter 12 with reference to FIG. 4. In FIG. 4, the steering wheel 11 and the meter 12 are extracted and illustrated, and a relative positional relationship between each of the lines 12a to 12j and the steering wheel 11 will be described below.

As illustrated in FIG. 4, all of the lines 12a to 12j displayed on the meter 12 are displayed such that the driver who is seated on the driver's seat can visually recognize them on the inside of the inner circumference 11d of the rim 11a of the steering wheel 11 in the radial direction and above the spoke 11c.

The connection lines 12g, 12h, each of which is respective one of the connection portions between the paired first lines 12a, 12b and the paired second lines 12c, 12d, are displayed to draw an arc that has a smaller radius of curvature than the inner circumference 11d of the rim 11a of the steering wheel 11. The connection lines 12g, 12h are displayed at positions in the vicinity of the inner circumference 11d of the rim 11a of the steering wheel 11 (portions indicated by arrows A1, A2 in FIG. 4).

The following lines are assumed. An inclined imaginary line L₃₀ extends obliquely to the left at an angle θa (for example, 30 degrees) with respect to the vehicle-width-direction imaginary line L_{H} from a radial center C₁₁ of the steering wheel 11, and an inclined imaginary line L₃₀ extends obliquely to the right at an angle θb (for example, 30 degrees) with respect to the vehicle-width-direction imaginary line L_{H} from the radial center C₁₁ of the steering wheel 11. In this case, the first line 12a and the first line 12b are displayed in modes of intersecting the left inclined imaginary line L₃₀ and the right inclined imaginary line L₃₀, respectively. That is, the first lines 12a, 12b are displayed in the vicinity of a 10:10 position of an analogue clock that is recommended as the grip area AR_{HND} when the driver grips the steering wheel 11. Accordingly, the driver can clearly perceive the grip area AR_{HND} of the steering wheel 11.

In addition, the paired first lines 12a, 12b are displayed to be visually recognizable by the driver who is seated on the driver's seat in a manner that a distance therebetween in the vehicle width direction is gradually reduced in the up direction from below. Similarly, the paired second lines 12c, 12d are displayed to be visually recognizable by the driver who is seated on the driver's seat in a manner that a distance therebetween in the vehicle width direction is gradually reduced in the up direction from below.

On the contrary, the paired third lines 12e, 12f are displayed to be visually recognizable by the driver who is seated on the driver's seat in a manner that a distance therebetween in the vehicle width direction is gradually increased in the up direction from below.

In addition, the paired first lines 12a and 12b and the paired second lines 12c, 12d are displayed to be visually recognizable by the driver who is seated on the driver's seat in a manner that a degree of the gradual reduction in the distance between the paired second lines 12c, 12d in the vehicle width direction is greater than a degree of the gradual reduction in the distance between the paired first lines 12a, 12b in the vehicle width direction.

A boundary imaginary line L_{V} that is a boundary between a monocular vision area AR_{MV} and a binocular vision area AR_{BV} when the driver looks forward is assumed. In this case, the first lines 12a, 12b are at least partially displayed in the binocular vision area AR_{BV}, and the second lines 12c, 12d are displayed in the monocular vision area AR_{MV}.

### 4. Effects

The vehicle interior display device 2 according to the present embodiment is configured such that the connection portions (the connection lines 12g, 12h) between the first lines 12a, 12b and the second lines 12c, 12d are displayed in the vicinity of the inner circumference 11d of the rim 11a of the steering wheel 11 on the meter 12. Accordingly, when the driver who is seated on the driver's seat adjusts the steering wheel 11 in the up-down direction according to his/her physique, it is only necessary to set positions of the connection lines 12g, 12h with respect to the inner circumference 11d of the rim 11a to appropriate positions. As a result, in the vehicle interior display device 2, the first lines 12a, 12b and the second lines 12c, 12d function as guides for the driver to quickly adjust a relative positional relationship between his/her own position and the steering wheel 11.

In addition, since the first lines 12a, 12b and the second lines 12c, 12d are displayed in the area above the vehicle-width-direction imaginary line L_{H} on the meter 12 in the vehicle interior display device 2 according to the present embodiment, the driver can visually recognize them without significant movement of his/her line of sight. Thus, the vehicle interior display device 2 is suitable for the seated driver to quickly adjust the relative positional relationship between his/her own position and the steering wheel 11.

The vehicle interior display device 2 according to the present embodiment is configured to display the paired first lines 12a, 12b, each of which includes the portion intersecting the inclined imaginary line L₃₀ on respective one of the left and right sides, on the meter 12 when the driver visually recognizes the front. As described above, the inclined imaginary line L₃₀ is an imaginary line that is assumed to extend obliquely upward from the radial center C11 of the steering wheel 11 at the angle of θa or θb (for example, 30 degrees) with respect to the vehicle-width-direction imaginary line (the vehicle horizontal axis) L_{H}. An intersection position between the inclined imaginary line L₃₀ and the rim of the steering wheel is the so-called 10:10 position of the analogue clock, and is a position recommended as a position where the driver grips the steering wheel (the grip area AR_{HND}). Thus, the vehicle interior display device 2 can guide the driver's hand to the recommended grip area AR_{HND}.

Since the vehicle interior display device 2 according to the present embodiment is configured to display the paired first lines 12a, 12b in a manner to be bilaterally symmetrical on the meter 12, the driver who has visually recognized the paired first lines 12a, 12b can perceive the up-down-direction imaginary line L_{DH} (in the present embodiment, a virtual line that matches a seating center of the driver) that extends in the up-down direction. Thus, the vehicle interior display device 2 can urge the driver who has visually recognized the paired first lines 12a, 12b to assume the correct driving posture.

The vehicle interior display device 2 according to the present embodiment is configured to display each of the paired first lines 12a, 12b and the paired second lines 12c, 12d on the meter 12 in the manner that the distance between the paired lines in the vehicle width direction is gradually reduced in the up direction from below. Accordingly, the vehicle interior display device 2 can guide the line of sight of the driver, who has visually recognized the paired first lines 12a, 12b and the paired second lines 12c, 12d, to a vanishing point and an area below when the driver attempts to visually recognize the foreground by moving his/her line of sight upward from the meter 12.

The vehicle interior display device 2 according to the present embodiment is configured to display, on the meter 12, the degree of the gradual reduction in the distance between the paired second lines 12c, 12d in the vehicle width direction to be greater than the degree of the gradual reduction in the distance between the paired first lines 12a, 12b in the vehicle width direction. Accordingly, the vehicle interior display device 2 is effective in guiding the line of sight to the vanishing point and the area below when the line of sight is moved further upward through the paired first lines 12a, 12b and the paired second lines 12c, 12d that are displayed on the meter 12.

The vehicle interior display device 2 according to the present embodiment is configured to display at least some of the paired first lines 12a, 12b in the binocular vision area AR_{BV} on the meter 12 and to display the paired second lines 12c, 12d in the monocular vision area AR_{MV} on the meter 12. Accordingly, it is possible to suppress the driver, who has visually recognized the second lines 12c, 12d displayed in an area closer to a front windshield (not illustrated) than the first lines 12a, 12b, from being bothered while causing the driver to recognize a stereoscopic image on the meter 12.

Meanwhile, since the first lines 12a, 12b are displayed in the binocular vision area AR_{BV} below the second lines 12c, 12d on the meter 12, it is possible to make the driver, who has visually recognized the left and right pair of the first lines 12a, 12b, recognize the further stereoscopic image by fusing the first lines 12a, 12b.

The vehicle interior display device 2 according to the present embodiment is configured such that the display color of the paired first lines 12a, 12b is changed according to at least one of the own vehicle state and the surrounding state. For example, the first lines 12a, 12b can be displayed in a neutral color during normal travel, and the first lines 12a, 12b can be displayed in a color that easily draws attention when it is necessary to issue an alarm to the driver. Thus, the vehicle interior display device 2 can notify the driver of at least one of the own vehicle state and the surrounding state by the display color of the paired first lines 12a, 12b.

The second lines 12c, 12d are each displayed between respective one of the first lines 12a, 12b and the front windshield (not illustrated), and thus function to guide the driver's line of sight to the first lines 12a, 12b when the driver who is driving moves his/her line of sight from the foreground to the meter 12.

As it has been described so far, the vehicle interior display device 2 according to the present embodiment allows the driver to visually recognize the display that functions as a guide for appropriately adjusting the relative position of the steering wheel 11 to the driver according to the driver's physique.

### [Modified Examples]

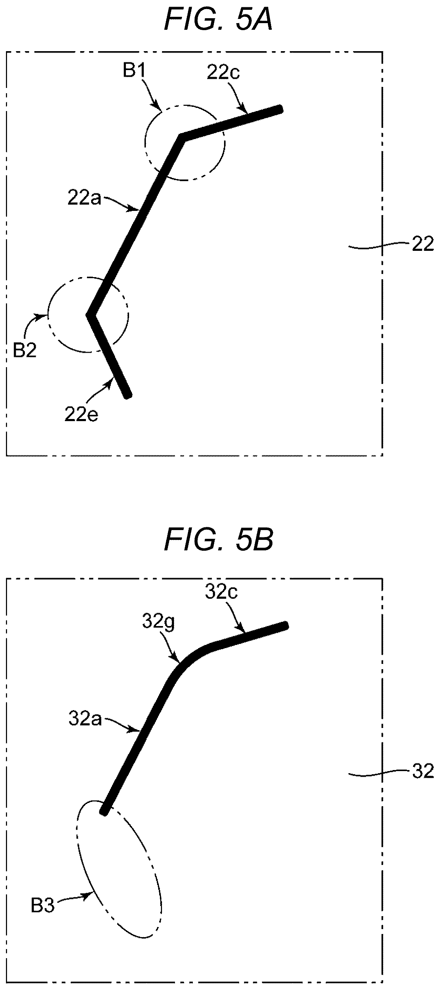

In the vehicle interior display device 2 according to the above embodiment, the meter 12 provides the display such that the connection lines 12g, 12h are interposed in the connection portions between the first lines 12a, 12b and the second lines 12c, 12d, respectively, and that the connection lines 12i, 12j are interposed in the connection portions between the first lines 12a, 12b and the third lines 12e, 12f, respectively. However, the interposition of the connection lines 12g to 12j is not essential in the invention. For example, as illustrated in FIG. 5(a), a meter 22 may display that a first line 22a and a second line 22c are directly connected and that the first line 22a and a third line 22e may be directly connected (portions indicated by arrows B1, B2).

Although FIG. 5(a) illustrates only a left portion of the meter 22, a mode in which the first line and the second line are directly connected can also be displayed in a right portion of the meter 22.

In the vehicle interior display device 2 according to the above embodiment, the mode in which the third lines 12e, 12f are respectively connected to the first lines 12a, 12b from below is displayed on the meter 12. However, the display of the third lines is not essential in the invention. For example, as illustrated in FIG. 5(b), it is also possible to display a first line 32a and a second line 32c, which are connected to each other by a connection line 32g, on a meter 32, and not to display the line in a portion indicated by an arrow B3.

Although FIG. 5(b) illustrates only a left portion of the meter 32, it is also possible not to display the third line in a right portion of the meter 32.

In the vehicle interior display device 2 according to the above embodiment, the first lines 12a, 12b and the second lines 12c, 12d are displayed in the area above the vehicle-width-direction imaginary line L_{H} on the meter 12. However, the invention is not limited thereto. For example, in the case where the spoke of the steering wheel only has a portion that extends downward from the hub, it can be configured such that the first line and the second line are displayed at positions below the vehicle-width-direction imaginary line.

In the vehicle interior display device 2 according to the above embodiment, the paired first lines 12a, 12b are displayed at the positions along the inner side of the grip area AR_{HND} of the steering wheel 11. However, the invention is not limited thereto. For example, the connection portions between the first lines 12a, 12b and the second lines 12c, 12d may be displayed in the vicinity of the grip area AR_{HND}, or the second lines 12c, 12d may be displayed at positions along the inner side of the grip area AR_{HND}.

In the vehicle interior display device 2 according to the above embodiment, the paired first lines 12a, 12b are displayed in the bilaterally symmetrical manner on the meter 12 with the up-down-direction imaginary line L_{DC} being the reference. However, in the invention, it is not essential to display the paired first lines in the bilaterally symmetrical manner with the up-down-direction imaginary line being the reference. The same applies to the paired second lines.

In the vehicle interior display device 2 according to the above embodiment, at least a part of each of the paired first lines 12a, 12b is displayed in the binocular vision area AR_{BV}, and the paired second lines 12c, 12d are displayed in the monocular vision area AR_{MV}. However, the invention is not limited thereto. For example, both of the paired first lines and the paired second lines may be displayed in the binocular vision area or may be displayed in the monocular vision area.

In the vehicle interior display device 2 according to the embodiment, the display color of the paired first lines 12a, 12b is changed according to the own vehicle state, the surrounding state, or the like. However, the invention is not limited thereto. For example, the display color may not be changed, and a change to blinking display or a thick line may be adopted.

In the vehicle interior display device 2 according to the above embodiment, the lines 12a to 12j are each displayed only by a line. However, the invention is not limited thereto. For example, gradation-like or dot-like display may be added around the line.

In the above embodiment, the configuration of the meter 12 as the information display unit is not specifically described. However, a liquid-crystal display, an EL display, or the like can be adopted therefor, for example.

The information displayed on the information display unit is not limited to the speed of the own vehicle, the remaining energy amount, and the like. An inter-vehicular distance from a vehicle traveling ahead, the surrounding state, further map information provided from a navigation system, and the like may be displayed.

### [Reference Signs List]

1: vehicle
1a: vehicle interior
2: vehicle interior display device
11: steering wheel
11a: rim
12, 22, 32: meter (information display unit)
12a, 12b, 22a, 32a: first line
12c, 12d, 22c, 32c: second line
21: display control unit
AR_{HND}: grip area
AR_{MV}: monocular vision area
AR_{BV}: binocular vision area

## Claims

1. A vehicle interior display device (2) including an information display unit (12, 22, 32) that visually provides various types of information to a driver who is seated on a driver's seat, wherein
the information display unit (12, 22, 32) is disposed in front of a steering wheel (11) that is coupled to a tilt mechanism in vehicle interior (1a) of a vehicle (1), and displays, in a manner to be visually recognizable by the driver who is seated on the driver's seat:
paired first lines (12a, 12b, 22a, 32a ) that are visually recognizable to be disposed along an inner circumference of a rim of the steering wheel (11) and away from each other on left and right sides in a vehicle width direction in the rim; and
paired second lines (12c, 12d, 22c, 32c) that are visually recognizable to be disposed away from each other on the left and right sides in the vehicle width direction in the rim of the steering wheel (11), and
in the information display unit (12, 22, 32),
the paired second lines (12c, 12d, 22c, 32c) are displayed above the paired first lines (12a, 12b, 22a, 32a),
the paired second lines (12c, 12d, 22c, 32c) and the paired first lines (12a, 12b, 22a, 32a )are displayed to intersect each other, respectively, and
a connection portion between each of the paired first lines (12a, 12b, 22a, 32a ) and respective one of the paired second lines (12c, 12d, 22c, 32c) is displayed in the vicinity of the inner circumference of the rim of the steering wheel (11) on the information display unit (12, 22, 32).

2. The vehicle interior display device (2) according to claim 1, wherein
when a vehicle-width-direction imaginary line that extends along a vehicle horizontal axis in the vehicle width direction through a radial center of the steering wheel (11) is assumed,
the paired first lines (12a, 12b, 22a, 32a) and the paired second lines (12c, 12d, 22c, 32c) are displayed in an area above the vehicle-width-direction imaginary line on the information display unit (12, 22, 32).

3. The vehicle interior display device (2) according to claim 2, wherein
when an up-down-direction imaginary line that extends in an up-down direction of the vehicle through the radial center of the steering wheel (11) and
paired left and right inclined imaginary lines (L_{H}) that extend obliquely to the left and right at an angle of 30 degrees with respect to the vehicle-width-direction imaginary line (L_{H}), respectively, are assumed,
one first line of the paired first lines (12a, 12b, 22a, 32a) is displayed on a left side of the up-down-direction imaginary line (L_{H}) on the information display unit (12, 22, 32), and another first line (12a, 12b, 22a, 32a) thereof is displayed on a right side of the up-down-direction imaginary line (L_{H}) on the information display unit (12, 22, 32),
the one first line (12a, 12b, 22a, 32a) is displayed to be visually recognizable by the driver who is seated on the driver's seat in a manner to intersect the inclined imaginary line (L_{H}) that extends obliquely to the left from the radial center, and
the another first line (12a, 12b, 22a, 32a) is displayed to be visually recognizable by the driver who is seated on the driver's seat in a manner to intersect the inclined imaginary line (L_{H}) that extends obliquely to the right from the radial center.

4. The vehicle interior display device (2) according to claim 3, wherein
the paired first lines (12a, 12b, 22a, 32a) are displayed to be visually recognizable by the driver who is seated on the driver's seat in a manner to be bilaterally symmetrical about the up-down-direction imaginary line (L_{H}).

5. The vehicle interior display device (2) according to any one of claim 1 to claim 4, wherein
the paired first lines (12a, 12b, 22a, 32a) are displayed to be visually recognizable by the driver who is seated on the driver's seat in a manner that a distance therebetween in the vehicle width direction is gradually reduced in an up direction from below, and
the paired second lines (12c, 12d, 22c, 32c) are displayed to be visually recognizable by the driver who is seated on the driver's seat in a manner that a distance therebetween in the vehicle width direction is gradually reduced in the up direction from below.

6. The vehicle interior display device (2) according to claim 5, wherein
the paired first lines (12a, 12b, 22a, 32a) and the paired second lines (12c, 12d, 22c, 32c) are displayed to be visually recognizable by the driver who is seated on the driver's seat in a manner that a degree of the gradual reduction in the distance between the paired second lines (12c, 12d, 22c, 32c) is greater than a degree of the gradual reduction in the distance between the paired first lines (12a, 12b, 22a, 32a).

7. The vehicle interior display device (2) according to any one of claim 1 to claim 4, wherein
the paired first lines (12a, 12b, 22a, 32a) are at least partially displayed in a binocular vision area (AR_{BV}), and
the paired second lines (12c, 12d, 22c, 32c) are displayed in a monocular vision area (AR_{MV}).

8. The vehicle interior display device (2) according to any one of claim 1 to claim 4, wherein
a display color of the paired first lines (12a, 12b, 22a, 32a) is changed according to at least one of a state of the vehicle and a surrounding state.

9. The vehicle interior display device (2) according to any one of the preceding claims, wherein the vehicle interior display device (2) is configured to display the first lines (12a, 12b, 22a, 32a) in the binocular vision area (AR_{BV}) below the second lines (12c, 12d, 22c, 32c) on the information display unit.

10. The vehicle interior display device (2) according to any one of the preceding claims, wherein the vehicle interior display device (2) is configured to display each of the second lines (12c, 12d, 22c, 32c) between respective one of the first lines (12a, 12b, 22a, 32a) and the front windshield.

11. The vehicle interior display device (2) according to any one of the preceding claims, wherein the vehicle interior display device (2) comprises a display control unit (21) which includes a first line display command unit (211), a second line display command unit (212), a third line display command unit (213), a connection line display command unit (214), and a display color command unit (215).

12. The vehicle interior display device (2) according to claim 11, wherein the vehicle interior display device (2) is configured so that all of the lines (12a to 12j), which are displayed on the information display unit (12, 22, 32) by the commands from the respective units (211 to 215) of the display control unit (21), are displayed on a radially inner side of an inner circumference (11d) of the rim (11a) of the steering wheel (11).

13. The vehicle interior display device (2) according to any one of the preceding claims, wherein the vehicle interior display device (2) is configured to display the first lines (12a, 12b, 22a, 32a) and the second lines (12c, 12d, 22c, 32c) in the area above the vehicle-width-direction imaginary line (L_{H}).

14. The vehicle interior display device (2) according to any one of claims 1 to 12, wherein the vehicle interior display device (2) is configured to display the first lines (12a, 12b, 22a, 32a) and the second lines (12c, 12d, 22c, 32c) at positions below the vehicle-width-direction imaginary line (L_{H}).

15. A vehicle comprising with an interior display device (2) according to any one of claims 1 to 14.
